# EUROPÄISCHE PATENTSCHRIFT

(11) **EP 0 912 373 B1**
(45) Veröffentlichungstag und Bekanntmachung des Hinweises auf die Patenterteilung: **06.03.2002**
(21) Anmeldenummer: 97934424.9
(22) Anmeldetag: 14.07.1997
(51) Int. Cl.: B60R 21/00

(54) **RECHENEINHEIT FÜR EIN STEUERGERÄT FÜR EIN KRAFTFAHRZEUG**
COMPUTER UNIT FOR MOTOR VEHICLE CONTROLLING EQUIPMENT
UNITE DE CALCUL POUR L'APPAREIL DE COMMANDE D'UN VEHICULE A MOTEUR

(30) Priorität: 16.07.1996 DE 19628654
(43) Veröffentlichungstag der Anmeldung: 06.05.1999
(73) Patentinhaber: SIEMENS AKTIENGESELLSCHAFT, 80333 München (DE)
(72) Erfinder: BLANK, Thomas, D-93059 Regensburg (DE); UHDE, Jochen, D-93345 Hausen (DE)
(86) Internationale Anmeldenummer: DE9701484
(87) Internationale Veröffentlichungsnummer: WO9802334

(56) Entgegenhaltungen:
- EP-A- 0 118 922
- EP-A- 0 392 953
- DE-A- 4 303 774
- US-A- 5 138 548

## Beschreibung

Die Erfindung betrifft eine Recheneinheit für ein Steuergerät für ein Kraftfahrzeug gemäß dem Oberbegriff des Patentanspruchs 1.

Recheneinheiten, die in Kraftfahrzeugen verwendet werden und die eine Ausgangsgröße zum Steuern einer Funktion des Kraftfahrzeugs - z.B. eines Aktors liefern -, sind hinreichend bekannt: So führen Recheneinheiten beispielsweise die Steuerung bzw. Regelung z.B. eines Motors, eines Getriebes oder einer Insassenschutzeinrichtung durch. Eine solche Recheneinheit ist üblicherweise als Mikrorechner ausgebildet, der einen ersten, nichtflüchtigen und nur lesbar ausgebildeten Speicher aufweist (ROM = Read Only Memory), einen zweiten, nichtflüchtigen, schreib- und lesbaren Speicher (EPROM = Erasable Programable Read Only Memory), einen flüchtigen, schreib- und lesbaren Speicher (RAM = Random Access Memory) sowie einen Mikroprozessor und einen oder mehrere Ein- und Ausgänge. Über die Eingänge werden der Recheneinheit Eingangsgrößen - z.B. Meßgrößen - in Form von analogen oder digitalen Signalen zugeführt. Über die Ausgänge werden Ausgangsgrößen in Form von Steuersignalen z.B. an Aktoren abgegeben. Eine solche Recheneinheit ist mit zahlreichen weiteren elektrischen Bauelementen in einem Gehäuse angeordnet. Ein solches eine Steuerschaltung enthaltendes Gehäuse ist in der Kraftfahrzeugtechnik unter dem Namen Steuergerät bekannt.

Die erfindungsgemäße Recheneinheit wie auch der nächstliegende Stand der Technik wird im folgenden zwar im Zusammenhang mit der Ansteuerung eines Insassenschutzsystems erläutert; die erfindungsgemäße Recheneinheit ist jedoch keinesfalls auf diese spezielle Anwendung beschränkt sondern kann in beliebigen Steuergeräten des Kraftfahrzeugs zum Einsatz kommen.

Die DE-A-43 03 774 offenbart eine Recheneinheit für ein Steuergerät für ein Kraftfahrzeug, die eine Ausgangsgröße zum Steuern einer Funktion (eines Sicherheits- Gaskissens) des Kraftfahrzeugs liefert, mit einem ersten, nichtflüchtigen Speicher, der nur lesbar ausgebildet ist, und mit einem zweiten, nichtflüchtigen Speicher, der schreibbar und lesbar ausgebildet ist. Der nichtflüchtige Speicher dient hierbei offenbar der Anpassung der Schwellwerte an unterschiedliche Fahrzeuge.

Eine Auftrennung von fahrzeugunabhängigen Programmen auf Nur- Lesespeicher und von wählbaren fahrzeugabhängigen Parametern auf Schreib-/Lesespeicher ist ferner noch aus der US-A-5 138 548 bekannt.

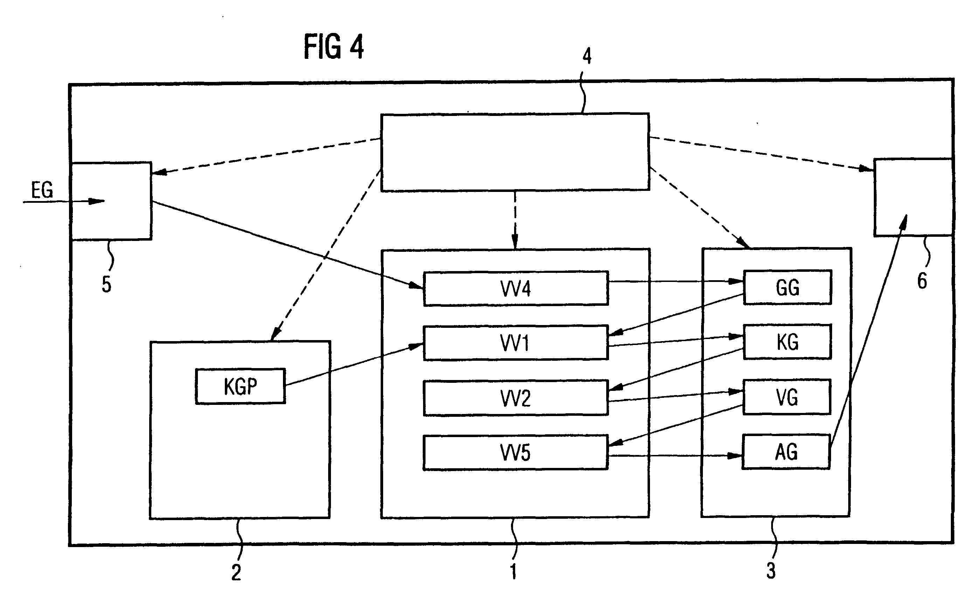

Aus der betrieblichen Praxis ist eine dem Oberbegriff des Anspruchs 1 entsprechende Recheneinheit eines Airbag-Steuergeräts gemäß Figur 4 bekannt. Die Recheneinheit wertet als Eingangsgröße EG beispielsweise ein oder mehrere Meßsignale von Beschleunigungssensoren algorithmisch aus und übermittelt bei Bedarf eine Ausgangsgröße AG als Auslösesignal beispielsweise an einen Airbag, einen Gurtstraffer oder ein sonstiges Rückhaltemittel im Fahrzeug.

Algorithmische Verarbeitungsvorschriften VV1, VV2, VV4 und VV5 sind dabei in einem ersten, nichtflüchtigen und nur lesbaren Speicher 1 abgelegt. Der erste Speicher 1 ist vorzugsweise ein ROM. Ein einmal mit Verarbeitungsvorschriften VV belegtes ROM kann nicht mehr beschrieben werden. Die Recheneinheit enthält weiterhin einen Eingang 5, an dem die Eingangsgröße/n EG anliegt/en, einen Ausgang 6 zur Ausgabe der beispielsweise den Airbag steuernden Ausgangsgröße AG sowie einen zweiten, nichtflüchtigen aber schreib- und lesbar ausgebildeten Speicher 2 (EPROM), einen dritten, flüchtigen, schreib- und lesbar ausgebildeten Speicher 3 (RAM) sowie einen Prozessor 4. Der Prozessor 4 arbeitet die im ersten Speicher 1 abgelegten Verarbeitungsvorschriften VV ab und greift dabei auf Eingangsgrößen EG und auf im zweiten Speicher 2 abgelegte Kenngrößen-Parameter KGP zu und legt berechnete Größen im dritten Speicher 3 ab bzw liefert Ausgangsgrößen AG an den Ausgang 6. Dieser rechnerinterne Ressourcenzugriff ist durch die vom Prozessor 4 ausgehenden gestrichelten Pfeile zum Ausdruck gebracht.

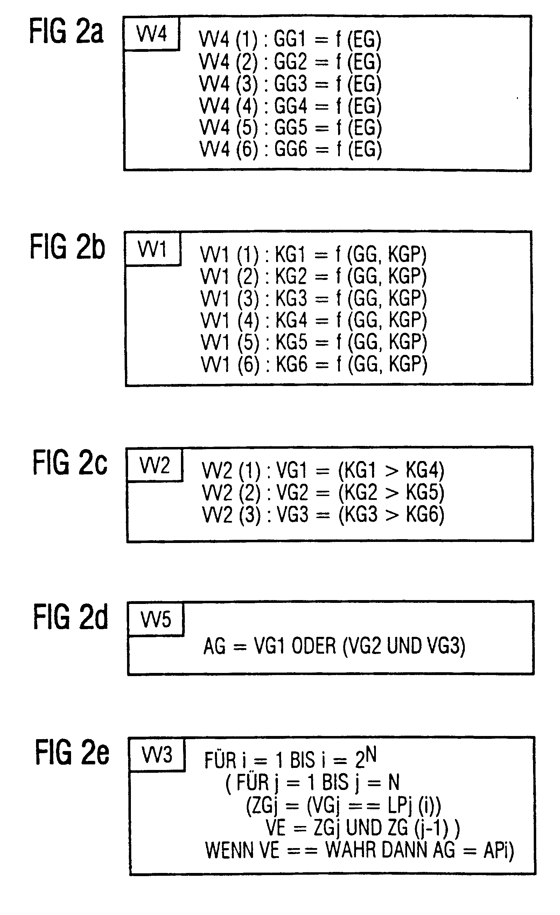

Insbesondere umfaßt der betriebliche Stand der Technik eine Recheneinheit zum Auslösen eines Insassenschutzsystems, bei der mit einer im ersten Speicher 1 abgelegten vierten Verarbeitungsvorschrift VV4 aus einer oder mehreren Eingangsgrößen EG eine oder mehrere Grundgrößen GG berechnet werden (Figur 4). Figur 2a zeigt sechs beispielhafte vierte Verarbeitungsvorschriften VV4(1) bis VV4(6) zur Berechnungen von sechs Grundgrößen GG1 bis GG6 aus einer Eingangsgröße EG. Die Eingangsgröße EG ist vorzugsweise das von einer Sensoreinrichtung zur Aufprallerkennung gelieferte Beschleunigungssignal. Die Grundgrößen GG1 bis GG6 sind beispielsweise aus der Eingangsgröße EG abgeleitete Größen, wie z.B. eine durch Integration der Beschleunigung gewonnene Geschwindigkeit als erste Grundgröße GG1, eine durch zweifache Integration der Beschleunigung gewonnene Grundgröße GG2, eine durch Quadrieren der Beschleunigung gewonnene Energie des Beschleunigungssignals als Grundgröße GG3, eine durch Differenzbildung zwischen aktuellem und vergangenem Geschwindigkeitswert gebildete Geschwindigkeitsdifferenz als Grundgröße GG4, eine aus der Beschleunigung berechnete Insassenvorverlagerung als Grundgröße GG5 oder eine aus der Insassenvorverlagerung berechnete Welligkeit (Dynamik der Geschwindigkeitsdifferenz GG4) als Grundgröße GG6.

Die berechneten Grundgrößen GG werden im dritten Speicher 3 abgelegt und dienen der nachfolgenden Berechnung von Kenngrößen KG durch erste Verarbeitungsvorschriften VV1. Solche Kenngrößen KG können zum einen sogenannte Auslösekriterien sein, die mit als Schwellwerte ausgebildeten Kenngrößen KG im folgenden verglichen werden. Beispielsweise werden gemäß Figur 2b sechs Kenngrößen KG1 bis KG6 als Funktion der berechneten Grundgrößen GG sowie als Funktion der Kenngrößen-Parametern KGP berechnet. Beispielsweise ergibt sich die erste Kenngröße KG1 aus einer Multiplikation der ersten Grundgröße GG1 mit einem ersten Kenngrößen-Parameter KGP1 zuzüglich einer Multiplikation der zweiten Grundgröße GG2 mit einem zweiten Kenngrößen-Parameter KGP2. Eine weitere Kenngröße KG, beispielsweise die vierte Kenngröße KG4, ist gleich einem weiteren Kenngrößen-Parameter KGP, beispielsweise dem Kenngrößen-Parameter KGP8.

Die berechneten Kenngrößen KG werden wiederum im dritten Speicher 3 abgelegt, bevor sie durch eine zweite Verarbeitungsvorschrift VV2 miteinander verglichen werden und als Ergebnis Vergleichsgrößen VG liefern, welche wiederum im dritten Speicher 3 abgelegt werden. Gemäß Figur 2c werden drei Vergleichsgrößen VG1, VG2, VG3 durch Vergleiche von jeweils zwei der sechs berechneten Kenngrößen KG berechnet. Die Vergleichsgrößen VG liefern vorzugsweise die binären Werte 0 oder 1 bzw. FALSCH oder WAHR als Ergebnis. Eine solche Vergleichsgröße VG liefert beispielsweise die Information, ob die Fahrzeuggeschwindigkeit eine mit zunehmender Zeitdauer ansteigende Schwelle überschritten hat.

Durch eine fünfte Verarbeitungsvorschrift VV5, die in Figur 2d abgebildet ist, wird eine Ausgangsgröße AG berechnet. Die fünfte Verarbeitungsvorschrift VV5 ist als logische Funktion ausgebildet und verknüpft die berechneten Vergleichsgrößen VG durch boolsche Operatoren. Die Ausgangsgröße AG ist ebenfalls als binäre Variable ausgebildet und nimmt den Wert WAHR oder FALSCH an. So nimmt beispielsweise die Ausgangsgröße AG gemäß Figur 2d den Wert WAHR an, wenn entweder die erste Vergleichsgröße VG1 den Wert WAHR annimmt, oder gleichzeitig die zweite Vergleichsgröße VG2 und die dritte Vergleichsgröße VG3 den Wert WAHR aufweisen. Ist die Ausgangsgröße AG WAHR, so wird über den Ausgang 6 der Recheneinheit ein Signal abgesetzt, das ein Insassenschutzsystem zündet. Die fünfte Verarbeitungsvorschrift VV5 liefert dabei die Information, daß ein Airbag ausgelöst wird, wenn die Fahrzeuggeschwindigkeit einen definierten Schwellwert überschreitet, oder wenn die Dynamik der Geschwindigkeitsdifferenz einen weiteren Schwellwert überschreitet und gleichzeitig die Insassenvorverlagerung einen dritten Schwellwert nocht nicht überschritten hat.

Die Kenngrößen-Parameter KGP im zweiten Speicher 2 können leicht geändert und damit beispielsweise an unterschiedliche Fahrzeugtypen angepaßt werden. Die durch die fünfte Verarbeitungsvorschrift VV5 vorgegebene logische Funktion des Auslösealgorithmus ist jedoch starr festgelegt und kann nur durch eine kosten- und zeitintensive Erstellung einer neuen ROM-Maske geändert werden.

Aufgrund immer kürzerer Entwicklungszyklen ist es jedoch wünschenswert, die logische Struktur von Algorithmen/Verarbeitungsvorschriften selbst dann noch ändern zu können, wenn bereits die ROM-Maske erstellt ist. Die Verarbeitungsvorschriften könnten bis hin zum Zeitpunkt der Serieneinführung entwickelt, verbessert und ohne Zeit- und Kostenaufwand auf der Recheneinheit umgesetzt werden.

Aufgabe der Erfindung ist es deshalb, eine Recheneinheit zu schaffen, die die Nachteile der bekannten Recheneinheit vermeidet, und die insbesondere ein Änderung einer Verarbeitungsvorschrift nach dem Erstellen der ROM-Maske gestattet.

Die Erfindung wird gelöst durch die Merkmale des Anspruches 1.

Dabei ist im ersten Speicher zur Berechnung einer Ausgangsgröße AG eine dritte Verarbeitungsvorschrift mit Vergleichen zwischen je einer der berechneten Vergleichsgrößen und je einem logischen Parameter abgespeichert. Die logischen Parameterwerte sind im zweiten Speicher abgelegt.

Anstelle der bekannten logischen Funktion der fünften Verarbeitungsvorschrift im ersten Speicher werden im erste Speicher lediglich Vergleichsroutinen als dritte Verarbeitungsvorschrift abgelegt, die die Menge der Vergleichsgrößen mit einer Menge von logischen Parametern vergleichen. Die Werte der logischen Parameter können infolge ihrer Anordnung im zweiten Speicher beliebig geändert werden. Da die logischen Parameter zusammen mit der unveränderlichen dritten Verarbeitungsvorschrift die logische Funktion der bekannten fünften Verarbeitungsvorschrift abbilden, kann die die Ausgangsgröße bestimmende logische Funktion jederzeit verändert werden, ohne daß die im ersten Speicher fest verankerte dritte Verarbeitungsvorschrift geändert werden müßte. Die logische Funktion zur Bestimmung der Ausgangsgröße AG kann durch Ändern der abgespeicherten logischen Parameterwerte LP nach Belieben auf einfache Art und Weise geändert werden.

Vorteilhafte Weiterbildungen der Erfindung sind in den Unteransprüchen gekennzeichnet.

Die Erfindung und ihre Weiterbildungen werden anhand der Zeichnung näher erläutert. Es zeigen:
- Figur 1: Eine erfindungsgemäße Recheneinheit,
- Figur 2: Beispiele für Verarbeitungsvorschriften, und
- Figur 3: im zweiten Speicher der Recheneinheit abgelegte Wahrheitstabellen.

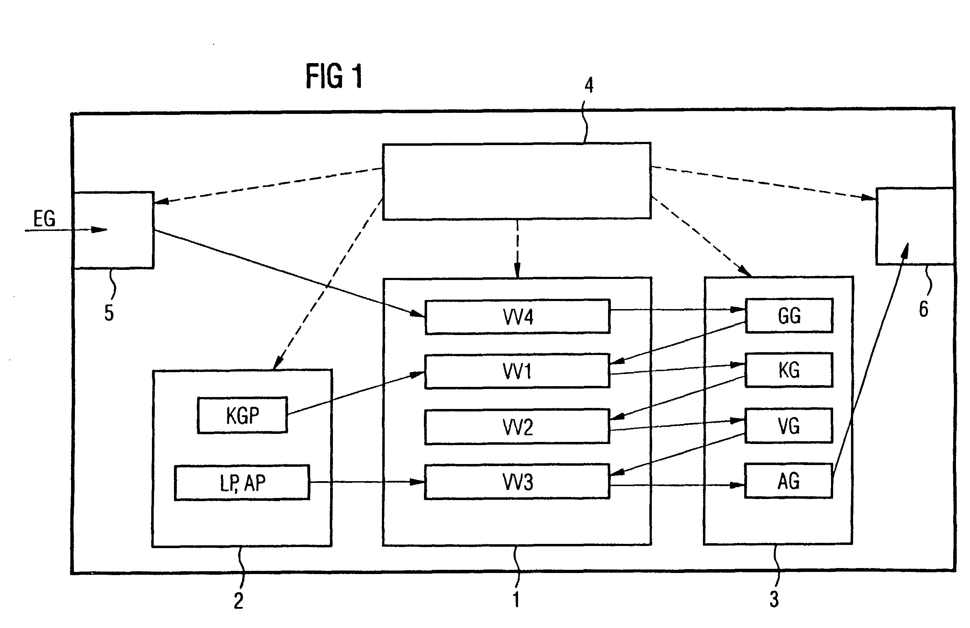

Die erfindungsgemäße Recheneinheit gemäß Figur 1 wird anhand ihrer Unterschiede zur bekannten Recheneinheit gemäß Figur 4 erläutert, wobei die bei beiden Recheneinheiten gleich ausgebildeten Bestandteile und Größen durch gleiche Bezugszeichen gekennzeichnet sind und und deshalb nicht mehr näher erläutert werden.

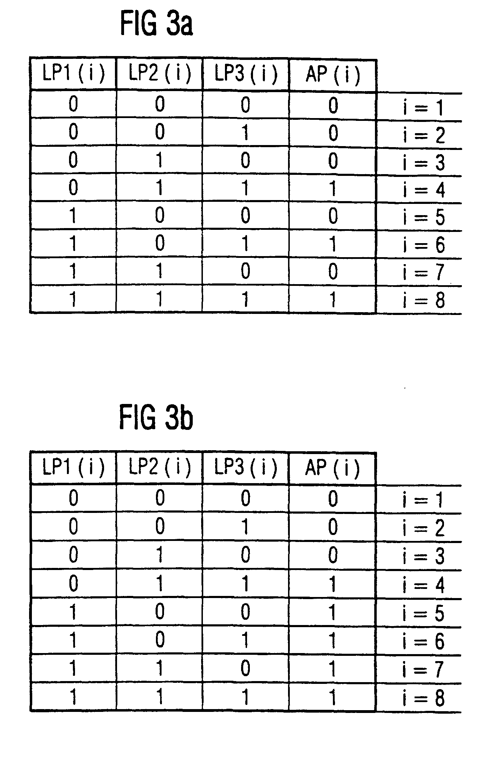

Anstelle der bei der bekannten Recheneinheit im ersten Speicher 1 abgelegten fünften Verarbeitungsvorschrift VV5 in Form einer logischen Funktion ist bei der erfindungsgemäßen Recheneinheit gemäß Figur 1 eine dritte Verarbeitungsvorschrift VV3 gemäß Figur 2e abgelegt. Zusätzlich enthält der zweite Speicher 2 Werte von logischen Parametern LP1 bis LP3 gemäß Figur 3. Ferner sind im zweiten Speicher 2 Werte eines Ausgangsparameters AP abgespeichert. Die Anzahl N der logischen Parameter LP1 bis LPN entspricht der Anzahl N der berechneten Vergleichsgrößen VG1 bis VGN. Für die Berechnung der Vergleichsgrößen VG, der Kenngrößen KG und der Grundgrößen GG sowie die Zuordnung zu den Speichern sind die Erläuterungen der Beschreibungseinleitung zu Figur 4 heranzuziehen.

Gemäß Figur 3 ist jeder logische Parameter LP sowie der Ausgangsparameter AP als Vektor LP[i] bzw AP[i] mit i=2^{*N*} Koordinaten ausgebildet. Bei einer Darstellung der Parameter LP und AP gemäß Figur 3 ergibt sich somit eine Tabelle mit der Menge der logischen Parametern LP1 bis LPN und dem Ausgangsparameter AP als Spalten sowie den Koordinaten i als Zeilen. In der Tabelle ist jeder Koordinate i eines Parametervektors LP[i], AP[i] ein binärer Wert zugeordnet. Eine solche Tabelle wird auch Wahrheitstabelle genannt. Die Tabelle enthält alle Kombinationen von Werten, die die Menge der logischen Parameter LP1 bis LPN annehmen kann. Einer jeden Menge von logischen Parameterwerten LP1[i] bis LPN[i] mit gleicher Koordiante i ist ein Wert des logischen Ausgangsparameters AP[i] mit gleicher Koordinate i zugeordnet. Die logische Funktion gemäß Figur 2b der bekannten Recheneinheit wird demnach auf eine Wahrheitstabelle gemäß Figur 3 abgebildet. Dabei ist je ein logischer Parameter LP genau einer Vergleichsgröße VG zugeordnet, so daß sich beispielsweise aus der in Figur 2d angegebenen logischen Funktion die Wahrheitstabelle gemäß Figur 3b ergibt. Der Ausgangsparameter AP ist der Ausgangsgröße AG zugeordnet. Die möglichen Kombinationen von Werten der logischen Parameter LP, die zu einer Ausgangsgröße AG mit dem Wert WAHR führen, sind in den Zeilen mit den Koordinaten i=4 bis i=8 in der Wahrheitstabelle gemäß Figur 3b gekennzeichnet. Die Wahrheitstabelle gemäß Figur 3a entspricht einer weiteren logischen Funktion.

Mit der dritten Verarbeitungsvorschrift VV3 gemäß Figur 2e wird jede Vergleichsgröße VG mit je einem zugeordneten logischen Parameter LP verglichen, wobei die Wahrheitstabelle zeilenweise abgearbeitet wird, so daß die Menge der Vergleichsgrößen VG1 bis VGN immer mit der Menge der logischen Parameter LP1 bis LPN derselben Koordinate i verglichen wird. Stimmen die ermittelten Vergleichsgrößen VG mit der Menge der logischen Parameter LP1[i] bis LPN[i] einer bestimmten Koordinate i überein, so wird gemäß der dritten Verarbeitungsvorschrift VV3 die Ausgangsgröße AG gleich dem Wert des dieser Koordinate i zugeordneten Ausgangsparameters AP zugeordnet.

Die in Figur 2e beschriebene dritte Verarbeitungsvorschrift VV3 stellt jedoch nur eine von vielen mögliche Implementierungen zum Vergleich von Vergleichsgrößen VG und logischen Parametern LP dar. Beginnend bei der ersten Koordinate i der Wahrheitstabelle wird Zeile für Zeile die Menge der Vergleichsgrößen VG1 bis VGN mit der Menge der logischen Parameter LP1 bis LPN einer Zeile verglichen und bei Übereinstimmung (WAHR) die Ausgangsgröße AG gleich dem Wert des Ausgangsparameters AP[i] in dieser Zeile i gesetzt. Zur Berechnung sind Zwischengrößen ZG und Vergleichsergebnis VE als Variable eingeführt. Anstelle der logischen Funktion wird also eine die logische Funktion repräsentierende Wahrheitstabelle (LP,AP) im zweiten Speicher (2) der Recheneinheit abgespeichert. Im ersten Speicher (1) ist eine Verarbeitungsvorschrift (VV3) abgelegt, durch die berechneten Vergleichsgrößen (VG) mit der Wahrheitstabelle (LP,AP) verglichen werden.

Es sind auch beliebige andere Suchstrategien als dritte Verarbeitungsvorschrift VV3 anwendbar.

Die Wahrheitstabelle kann im übrigen auch dahingehend verändert werden, daß sie eine Anzahl von Koordinaten i aufweist, die kleiner 2^{*N*} ist. In den verbleibenden Zeilen ist lediglich die Belegung von logischen Parametern LP abgespeichert, die beispielsweise den Wert WAHR als Ausgangsgröße liefert. Damit kann ggf auch das Abspeichern von Werten eines Ausgangsparametervektors AP[i] entfallen, da die Ausgangsgröße AG immer dann den Wert WAHR annimmt, wenn die Menge der Vergleichsgrößen VG1 bis VGN einer abgespeicherten Belegung der Menge der logischen Parameter LP1 bis LPN entspricht.

Zur Ausbildung der diversen Speicher wird angemerkt, daß unter einem nichtflüchtigen Speicher ein Speicher verstanden wird, dessen Speicherinhalt auch bei Wegfall der Betriebsspannung erhalten bleibt. Der Begriff Speicher umfaßt bei der erfindungsgemäßen Recheneinheit üblicherweise mehrere Speicherzellen. Der nicht flüchtige, schreib- und lesbare Speicher 2 ist vorzugsweise als EEPROM (Electrically Erasable Programmable Read Only Memory) ausgebildet und damit elektrisch programmierbar.

## Patentansprüche

1. Recheneinheit für ein Steuergerät für ein Kraftfahrzeug,
- die eine Ausgangsgröße (AG) zum Steuern einer Funktion des Kraftfahrzeugs in Abhängigkeit einer zugeführten Eingangsgröße (EG) liefert,
- mit einem ersten, nichtflüchtigen Speicher (1), der nur lesbar ausgebildet ist, und mit einem zweiten, nichtflüchtigen Speicher (2), der schreibbar und lesbar ausgebildet ist,
- bei der im ersten Speicher (1) erste Verarbeitungsvorschriften (VV1) zur Berechnung von Kenngrößen (KG) in Abhängigkeit der Eingangsgröße (EG) und/oder in Abhängigkeit eines Kenngrößen-Parameters (KGP) und zweite Verarbeitungsvorschriften (VV2) zur Berechnung von logischen Vergleichsgrößen (VG) auf der Basis der Kenngrößen (KG) gespeichert sind,
**dadurch gekennzeichnet, daß** Werte von logischen Parametern (LP) im zweiten Speicher (2) gespeichert sind, und daß im ersten Speicher (1) eine dritte Verarbeitungsvorschrift (VV3) zum Vergleichen von je einer logischen Vergleichsgröße (VG) mit je einem logischen Parameter (LP) zur Berechnung der Ausgangsgröße (AG) gespeichert ist.

2. Recheneinheit nach Anspruch 1, **dadurch gekennzeichnet, daß** jede Kenngröße (KG) abhängig ist von zumindest einer variablen Grundgröße (GG), welche ihrerseits abhängt von der Eingangsgröße (EG), und/oder von zumindest einem Kenngrößen-Parameter (KGP).

3. Recheneinheit nach Anspruch 2, **dadurch gekennzeichnet, daß** der Wert eines jeden Kenngrößen-Parameters (KGP) im zweiten Speicher (2) gespeichert ist.

4. Recheneinheit nach Anspruch 2, **dadurch gekennzeichnet, daß** im ersten Speicher (1) eine vierte Verarbeitungsvorschrift (VV4) zur Berechnung jeder Grundgröße (GG) gespeichert ist, die von zumindest einer der Recheneinheit zugeführten variablen Eingangsgröße (EG) abhängig ist.

5. Recheneinheit nach Anspruch 1, **dadurch gekennzeichnet, daß** der erste Speicher (1) als ROM ausgebildet ist.

6. Recheneinheit nach Anspruch 1, **dadurch gekennzeichnet, daß** der zweite Speicher (2) als EPROM ausgebildet ist.

7. Recheneinheit nach Anspruch 1, **dadurch gekennzeichnet, daß** der zweite Speicher (2) als EEPROM ausgebildet ist.

8. Recheneinheit nach Anspruch 1, **dadurch gekennzeichnet, daß** die Vergleichsgrößen (VG), die logischen Parameter (LP) und die Ausgangsgröße (AG) als binäre Variable ausgebildet sind.

9. Recheneinheit nach Anspruch 1, **dadurch gekennzeichnet, daß** der Menge der logischen Parameter (LP1 bis LPN) ein logischer Ausgangsparameter (AP) zugeordnet ist, und daß der Wert des logischen Ausgangsparameters (AP) im zweiten Speicher (2) gespeichert ist.

10. Recheneinheit nach Anspruch 1, **dadurch gekennzeichnet, daß** jeder logische Parameter (LP) als Vektor (LP[i]) mit zumindest zwei Koordinaten (i) ausgebildet ist.

11. Recheneinheit nach den Ansprüchen 9 und 10, **dadurch gekennzeichnet, daß** der logische Ausgangsparameter (AP) als Vektor (AP[i]) mit zumindest zwei Koordinaten (i) ausgebildet ist.

12. Recheneinheit nach Anspruch 11, **dadurch gekennzeichnet, daß** die im zweiten Speicher (2) abgelegten Werte der logischen Parameter (LP) und des Ausgangsparameters (AP) zumindest einen Teil einer Wahrheitstabelle bilden.

13. Recheneinheit nach den Ansprüchen 8 und 12, **dadurch gekennzeichnet, daß** die im zweiten Speicher (2) abgelegten Werte der logischen Parameter (LP) und des Ausgangsparameters (AP) eine vollständige Wahrheitstabelle bilden, wobei jeder logische Parametervektor (LP[i]) und der Ausgangsparametervektor (AP[i]) 2^{*N*} Koordinaten (i) aufweisen, mit N gleich der Anzahl der logischen Parameter (LP).

14. Recheneinheit nach Anspruch 1, **dadurch gekennzeichnet, daß** die Vergleiche in der dritten Verarbeitungsvorschrift (VV3) miteinander UND-verknüpft sind, und daß das Ergebnis der UND-Verknüpfung der Ausgangsgröße (AG) zugeordnet ist.

15. Recheneinheit nach Anspruch 12 oder 13, **dadurch gekennzeichnet, daß** die Vergleiche in der dritten Verarbeitungsvorschrift (VV3) miteinander UND-verknüpft sind, wobei nur Vergleiche zwischen Vergleichsgrößen (VG) und logischen Parametern (LP) der gleichen Koordinate (i) berücksichtigt sind, und daß der Ausgangsgröße (AG) der Wert des Ausgangsparameters (AP) mit gleicher Koordinate (i) zugeordet wird, wenn das Ergebnis der UND-verknüpften Vergleiche WAHR ist.

16. Recheneinheit nach Anspruch 1, **dadurch gekennzeichnet, daß** sie einen Prozessor (4) zum Abarbeiten der Verarbeitungsvorschriften (VV) aufweist, und daß sie einen dritten, flüchtigen, schreibbaren und lesbaren Speicher (3) zur Ablage der von dem Prozessor (4) berechneten Ergebnisse aufweist.

17. Recheneinheit nach Anspruch 1, **dadurch gekennzeichnet, daß** sie als Steuereinrichtung zum Auslösen eines Rückhaltemittels in einem Fahrzeug verwendet wird.

18. Recheneinheit nach den Ansprüchen 4 und 17, **dadurch gekennzeichnet, daß** die Eingangsgröße (EG) von der meßtechnisch erfaßten Beschleunigung des Kraftfahrzeugs abhängt.

## Claims

1. CPU for a control device for a motor vehicle,
- supplying an output variable (AG) for controlling a vehicle function depending on an applied input variable (EG),
- having a first non-volatile memory (1) implemented as read-only, and a second non-volatile memory (2) implemented as read/write,
- wherein first processing instructions (VV1) for the computation of characteristics (KG) as a function of the input variable (EG) and/or as a function of a characteristic parameter (KGP) and second processing instructions (VV2) for the computation of logical comparison variables (VG) on the basis of the characteristics (KG) are stored in the first memory (1),
**characterised in that** values of logical parameters (LP) are stored in the second memory (2) and that a third processing instruction (VV3) for comparing a logical comparison variable (VG) with a logical parameter (LP) for computing the output variable (AG) is stored in the first memory (1).

2. CPU according to Claim 1, **characterised in that** each characteristic (KG) is dependent on at least one basic variable (GG) which in turn depends on the input variable (EG) and/or on at least one characteristic parameter (KGP).

3. CPU according to Claim 2, **characterised in that** the value of each characteristic parameter (KGP) is stored in the second memory (2).

4. CPU according to Claim 2, **characterised in that** a fourth processing instruction (VV4) for computing each basic variable (GG) is stored in the first memory (1), said basic variable being dependent on at least one input variable (EG) fed to the CPU.

5. CPU according to Claim 1, **characterised in that** the first memory (1) is implemented as ROM.

6. CPU according to Claim 1, **characterised in that** the second memory (2) is implemented as EPROM.

7. CPU according to Claim 1, **characterised in that** the second memory (2) is implemented as EEPROM.

8. CPU according to Claim 1, **characterised in that** the comparison variables (VG), the logical parameters (LP) and the output variable (AG) are implemented as binary variables.

9. CPU according to Claim 1, **characterised in that** the set of logical parameters (LP1 to LPN) is assigned a logical output parameter (AP), and that the value of the logical output parameter (AP) is stored in the second memory (2).

10. CPU according to Claim 1, **characterised in that** each logical parameter (LP) is implemented as a vector (LP[i]) with at least two coordinates (i).

11. CPU according to Claims 9 and 10, **characterised in that** the logical output parameter (AP) is implemented as a vector (AP[i]) with at least two coordinates (i).

12. CPU according to Claims 11, **characterised in that** the values of the logical parameters (LP) and output parameter (AP) stored in the second memory (2) form at least part of a truth table.

13. CPU according to Claims 8 and 12, **characterised in that** the values of the logical parameters (LP) and of the output parameter (AP) stored in the second memory (2) form a complete truth table, each logical parameter vector (LP[i]) and the output parameter vector (AP[i]) having 2^{*N*} coordinates (i), where N equals the number of logical parameters (LP).

14. CPU according to Claim 1, **characterised in that** the comparisons in the third processing instruction (VV3) are ANDed together, and that the result of the AND operation is assigned to the output variable (AG).

15. CPU according to Claim 12 or 13, **characterised in that** the comparisons in the third processing instruction (VV3) are ANDed together, only comparisons between comparison variables (VG) and logical parameters (LP) of the same coordinates (i) being taken into account, and that the output variable (AG) is assigned the value of the output parameter (AP) with the same coordinate (i) if the result of the ANDed comparisons is TRUE.

16. CPU according to Claim 1, **characterised in that** it has a processor (4) for processing the processing instructions (VV), and that is has a third, volatile read/write memory (3) for storing the results computed by the processor (4).

17. CPU according to Claim 1, **characterised in that** it is used as a control device for triggering a restraint in a vehicle.

18. CPU according to Claims 4 and 17, **characterised in that** the input variable (EG) depends on the measured acceleration of the motor vehicle.

## Revendications

1. Calculateur pour un appareil de commande d'un véhicule automobile,
- qui délivre une grandeur de sortie (AG) pour commander une fonction du véhicule automobile en fonction d'une grandeur d'entrée appliquée (EG),
- qui comporte une première mémoire non volatile (1) à lecture seule et une deuxième mémoire non volatile (2) à écriture et à lecture,
- dans lequel dans la première mémoire (1) sont rangées des premières instructions de traitement (VV1) pour calculer des grandeurs caractéristiques (KG) en fonction de la grandeur d'entrée (EG) et/ou en fonction d'un paramètre de grandeur caractéristique (KGP), ainsi que des deuxièmes instructions de traitement (VV2) pour le calcul de grandeurs de comparaison logiques (VG) sur la base des grandeurs caractéristiques (KG),
**caractérisé en ce que** des valeurs de paramètres logiques (LP) sont rangées dans la deuxième mémoire (2) et qu'une troisième instruction de traitement (VV3) est rangée dans la première mémoire (1) pour comparer respectivement chaque fois une grandeur logique de comparaison (VG) à un paramètre logique (LP) afin de calculer la grandeur de sortie (AG).

2. Calculateur selon la revendication 1, **caractérisé en ce que** chaque grandeur caractéristique (KG) est fonction d'au moins une grandeur fondamentale (GG) variable qui est fonction, à son tour, de la grandeur d'entrée (EG) et/ou d'au moins un paramètre de grandeur caractéristique (KGP).

3. Calculateur selon la revendication 2, **caractérisé en ce que** la valeur d'un paramètre de chacune des grandeurs caractéristiques est rangée dans la deuxième mémoire (2).

4. Calculateur selon la revendication 2, **caractérisé en ce que** dans la première mémoire (1), est rangée une quatrième instruction de traitement (VV4) pour le calcul de chaque grandeur fondamentale (GG), qui est fonction d'au moins une grandeur d'entrée (EG) variable appliquée au calculateur.

5. Calculateur selon la revendication 1, **caractérisé en ce que** la première mémoire (1) est construite sous forme d'une mémoire ROM.

6. Calculateur selon la revendication 1, **caractérisé en ce que** la deuxième mémoire (2) est construite sous forme d'une mémoire EPROM.

7. Calculateur selon la revendication 1, **caractérisé en ce que** la deuxième mémoire (2) est construite sous forme d'une mémoire EEPROM.

8. Calculateur selon la revendication 1, **caractérisé en ce que** les grandeurs de comparaison (VG), les paramètres logiques (LP) et la grandeur de sortie (AG) se présentent sous la forme de variables binaires.

9. Calculateur selon la revendication 1, **caractérisé en ce qu'**un paramètre de sortie logique (AP) est affecté à la quantité de paramètres logiques (LP1 à LPN) et que la valeur du paramètre de sortie logique (AP) est rangée dans la deuxième mémoire (2).

10. Calculateur selon la revendication 1, **caractérisé en ce que** chaque paramètre logique (LP) est conçu sous la forme d'un vecteur (LP(i)) ayant au moins deux coordonnées (i).

11. Calculateur selon les revendications 9 ou 10, **caractérisé en ce que** le paramètre de sortie logique (AP) est conçu sous la forme d'un vecteur (AP(i)) ayant au moins deux coordonnées (i).

12. Calculateur selon la revendication 11, **caractérisé en ce que** les valeurs des paramètres logiques (LP) et du paramètre de sortie (AP) rangées dans la deuxième mémoire (2) forment au moins une partie d'une table de vérité.

13. Calculateur selon les revendications 8 et 12, **caractérisé en ce que** les valeurs des paramètres logiques (LP) et du paramètre de sortie (AP) rangées dans la deuxième mémoire (2) forment une table de vérité complète, chaque vecteur de paramètre logique (LP(i)) et le vecteur de paramètre de sortie (AP(i)) ayant 2^{N} coordonnées (i), N étant égal au nombre de paramètres logiques (LP).

14. Calculateur selon la revendication 1, **caractérisé en ce que** les comparaisons dans la troisième instruction de traitement (VV3) sont combinées entre elles par une fonction logique ET, et **en ce que** le résultat de la combinaison ET est affecté à la grandeur de sortie (AG).

15. Calculateur selon la revendication 12 ou 13, **caractérisé en ce que** les comparaisons dans la troisième instruction de traitement (VV3) sont combinées entre elles par une fonction logique ET, et on prend en compte uniquement les comparaisons entre des grandeurs de comparaison (VG) et des paramètres logiques (LP) qui ont la même coordonnée (i) et **en ce que** la valeur du paramètre de sortie (AP) ayant une même coordonnée (i) est affectée à la grandeur de sortie (AG) si le résultat des comparaisons à combinaison ET donne la valeur VRAI.

16. Calculateur selon la revendication 1, **caractérisé en ce qu'**il comporte un processeur (4) pour exécuter les instructions de traitement (VV), et **en ce qu'**il comporte une troisième mémoire (3) volatile à écriture et à lecture pour stocker les résultats calculés par le processeur (4).

17. Calculateur selon la revendication 1, **caractérisé en ce qu'**il est utilisé comme dispositif de commande pour le déclenchement d'un organe de retenue dans un véhicule.

18. Calculateur selon les revendications 4 et 17, **caractérisé en ce que** la grandeur d'entrée (EG) est fonction de l'accélération du véhicule automobile captée par une technique de mesure.
